# EUROPÄISCHE PATENTSCHRIFT

(11) **EP 3 437 929 B1**
(45) Veröffentlichungstag und Bekanntmachung des Hinweises auf die Patenterteilung: **14.04.2021**
(21) Anmeldenummer: 18186451.3
(22) Anmeldetag: 31.07.2018
(51) Int. Cl.: B60R 1/00

(54) **SICHTSYSTEM MIT FAHRSITUATIONSBEDINGTER SICHTFELD-/SICHTBEREICHEINBLENDUNG**
VISUAL SYSTEM WITH VISUAL FIELD/VIEW AREA DISPLAY DEPENDING ON THE DRIVING SITUATION
SYSTÈME DE VISION À CHAMPS DE VISION / EFFET D'INCRUSTATION DE LA ZONE DE VISION EN FONCTION DE LA SITUATION DE CONDUITE

(30) Priorität: 31.07.2017 DE 102017117287
(43) Veröffentlichungstag der Anmeldung: 06.02.2019
(73) Patentinhaber: MEKRA Lang GmbH & Co. KG, 91465 Ergersheim (DE)
(72) Erfinder: Lang, Werner, 91465 Ergersheim (DE); Rebelein, Christian, 91580 Petersaurach (DE)
(74) Vertreter: Kramer Barske Schmidtchen Patentanwälte PartG mbB

(56) Entgegenhaltungen:
- EP-A1- 3 166 307
- DE-A1-102015 011 536
- JP-A- 2010 147 516
- US-A1- 2011 025 489
- US-A1- 2017 129 405

## Beschreibung

### TECHNISCHES GEBIET

Die vorliegende Erfindung betrifft ein Sichtsystem für ein Fahrzeug, insbesondere ein Nutzfahrzeug, das eine fahrsituationsbedingte Sichtfeld-/Sichtbereichseinblendung durchführt.

### HINTERGRUND

Bei Kraftfahrzeugen ist es gesetzlich vorgeschrieben, sogenannte Sichtfelder rund um das Fahrzeug für den Fahrer im Fahrbetrieb einsehbar zu machen. Welche Sichtfelder einsehbar sein müssen, basiert auf dem Typ des Kraftfahrzeugs, zum Beispiel Krafträdern, Kraftfahrzeuge zum Transportieren von Passagieren, Kraftfahrzeuge zum Transportieren von Gütern, etc. Die Einsehbarkeit der Sichtfelder muss von einer Einrichtung zur indirekten Sicht bereitgestellt werden und die Sichtfelder müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa sind die Sichtfelder, die für einen Fahrer jederzeit zuverlässig einsehbar sein müssen, in der UN/ECE-Richtlinie Nr. 46 definiert, die nachfolgend weiter beschrieben wird. Weitere relevante Normen bzw. Richtlinien schließen beispielsweise die ISO 5721, ISO 5006, ISO 16505, ISO14401 und die EU 167/2013 ein. Neben den gesetzlich geforderten Sichtfeldern werden oftmals weitere Bereiche rund um das Fahrzeug, sogenannte Sichtbereiche, durch Einrichtungen zur indirekten Sicht einsehbar gemacht.

Üblicherweise wird die Betrachtung der Sichtfelder mit einem oder mehreren Spiegeln ermöglicht. Jedoch haben Spiegel einige Nachteile. Zum Beispiel zeigen Spiegel dem Fahrer lediglich Objekte, die auf derselben Seite des Spiegels wie der Fahrer sind. Irgendein Objekt hinter einem Spiegel kann nicht durch diesen Spiegel gezeigt werden. Zusätzlich zeigen Spiegel, die lediglich aus flachem Glas hergestellt sind, dem Fahrer einen kleinen Bereich, außer die Spiegel sind sehr nahe bei dem Fahrer. Falls sie konvex geformt sind, erzeugt dies eine Bildverzerrung. Große Fahrzeuge weisen üblicherweise sieben oder mehr Spiegel auf, die um die Außenseite des Fahrzeugs herum montiert sind, von denen die meisten verzerrt und konvex sind, was es schwierig für den Fahrer macht, auf alle relevanten Spiegel zur selben Zeit zu achten. Dennoch gibt es um diese Fahrzeuge üblicherweise immer noch blinde Flecke auf, trotz all der Spiegel.

In letzter Zeit wurde es zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen. In solchen Kamerasystemen erfasst (ermittelt und speichert) eine Bildsensoreinrichtung kontinuierlich ein Bild. Die (Video-) Daten, die von der Bilderfassungseinheit erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, das die Sichtfelder jederzeit für den Fahrer permanent einsehbar sind. Gleichzeitig liefert das Sichtsystem eine verbesserte Nachtansicht, flexiblere Anordnungsmöglichkeiten und größere Sichtfelder mit der Möglichkeit einer geringeren Verzerrung.

Permanent einsehbar bedeutet in diesem Zusammenhang, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon oder durch Einblenden anderer Darstellungen derart unterbrochen wird, dass das Sichtfeld nicht komplett gesehen werden kann. Entsprechend werden das entsprechende Sichtfeld oder die Sichtfelder kontinuierlich und in Echtzeit auf der Anzeigeeinrichtung gezeigt bzw. einsehbar gemacht. Dies gilt zumindest für als permanent einsehbar vorgeschriebene Sichtfelder für alle Fahrzeugzustände, bei denen der Zündschalter eingeschaltet ist, bevorzugter Weise zum Beispiel gekoppelt an einen Sensor, der ein entsprechendes Signal empfängt, beispielsweise eine Türöffhungssignal oder ein Zündungseinschaltsignal.

Moderne Spiegel erzeugen ein nahezu perfekt scharfes Bild für einen Fahrer. Der Detaillierungsgrad, der dem Fahrer zur Verfügung steht, hängt von dem Abstand zu dem Objekt und der Sehkraft des Fahrers ab. Mit Kamerasystemen wird der Detaillierungsgrad von vielen verschiedenen Parametern beeinflusst: Der Auflösung des Kamerasensors, dem Sichtfeld der Kamera, aber auch der Auflösung des Monitors, welcher Teil des Kamerasichtfeldes auf dem Monitor angezeigt wird und wie groß dieser Teil ist, wie weit der Monitor von dem Fahrerplatz entfernt ist und der Sehkraft des Fahrers. Je nach Kombination dieser Parameter können die Fahrer imstande sein, hinein zu zoomen (eine Ansicht zu vergrößern) und weit entfernte Objekte klar zu sehen, die sie in einem Spiegel nicht erkennen oder entsprechend detailreich sehen können. Bei anderen Kombinationen dieser Parameter kann es jedoch vorkommen, dass der Fahrer auf ein Gebiet mit einer derart schlechten Auflösung schaut, dass er es versäumt, eine gefährliche Verkehrssituation zu erkennen.

Ferner bei Einsatz von Spiegeln deren natürliche Tiefenschärfe verwendet werden, um drei Dimensionen in dem Spiegel zu sehen. Dies ermöglicht dem Fahrer ein komfortables Verständnis seiner eigenen Position im Bezug auf die im Spiegel abgebildete Umwelt von Objekten darin. Verwendet man Kamerasysteme mit den üblicherweise verfügbaren zweidimensionalen Anzeigen, steht dem Fahrer keine Tiefenschärfe zur Verfügung, was bedeutet, dass der Fahrer die sichtbare Größe von Merkmalen auf dem Bildschirm verwenden muss, um deren relative Position als auch die relative Geschwindigkeit zum Fahrzeug zu beurteilen. Diese Beurteilung kann insbesondere schwierig sein, wenn der Fahrer in ein Bild hinein oder aus einem Bild heraus zoomen kann (eine Ansicht vergrößern oder verkleinern kann). Falls es dem Fahrer ermöglicht wird, in einem dargestellten Bild hinein und hinaus zu zoomen, kann er sehr leicht den Überblick darüber verlieren, wie weit Objekte entfernt sind. Dies kann zu gefährlichen Situationen auf der Straße führen.

Ferner kann beim Einsatz von Spiegeln der Fahrer durch Neigen und durch Drehen seines Kopfes durch Neigen verschiedene Gebiete betrachten. Dies gibt dem Fahrer einen Zugang zu einem breiteren (größeren) Sichtbereich und es gibt ihm auch ein komfortables Verständnis, worauf er in der umliegenden Umgebung blickt. Kamerasysteme hingegen können herumschwenkbar gestaltet sein, um verschiedene Gebiete zu sehen. Da der Fahrer an das Verwenden der physikalischen Sinneseindrücke des Neigens und Betrachtens gewähnt ist, kann er den Überblick verlieren, worauf er exakt in der Umgebung blickt. Dies kann zu einer gefährlichen Situation führen, wenn der Fahrer den Ort eines Objekts missdeutet oder falls der Fahrer das Kamerasystem ein irrelevantes Gebiet der Umgebung und nicht die wichtigen Gebiete anzeigen lässt.

Ferner kann die Größe der Anzeige der gesetzlich vorgeschriebenen Sichtfelder dazu führen, dass der Fahrer Hindernisse nicht oder nicht rechtzeitig erkennt, weil diese auf dem Monitor zu klein oder gar nicht angezeigt werden. Insbesondere bei situationsbedingten Fahrmanövern, wie beispielsweise einem Abbiege- oder Ausparkvorgang oder einer Rückwärtsfahrt, kann eine erhöhte Unfallgefahr bestehen, da der Fahrer zwar das vorgeschriebene Sichtfeld für das entsprechende Fahrmanöver auf dem Monitor einsehen kann, den Bereich einer erhöhten Kollisionsgefahr, der nur einen kleinen Teil eines Sichtfelds umfasst oder gar außerhalb des angezeigten Sichtfeldes liegt, jedoch nicht detailliert oder gar nicht angezeigt bekommt. So kann es, speziell bei Nutzfahrzeugen aufgrund deren großer Abmessungen, unübersichtlicher Geometrien und mitunter Anbauten, zu einer erhöhten Kollisionsgefahr kommen, insbesondere bei situationsbedingten Fahrmanövern.

Die DE 10 2015 001 359 A1 offenbart ein Verfahren zum Anzeigen von Umgebungsbildern eines Kraftfahrzeugs mit einer Anzeigeeinrichtung. Die Umgebungsbilder werden von zumindest zwei verschiedenen Bildaufnahmeeinrichtungen des Kraftfahrzeugs aufgenommen und mindesten eine der zwei Bildaufnahmeeinrichtungen stellt eine Seitenkamera dar, die ein Umgebungsbild von einer auf einer linken oder rechten Seite des Kraftfahrzeugs in Bezug auf eine Fahrzeuglängsrichtung des Kraftfahrzeugs befindlichen Umgebung aufnimmt. Dabei umfasst das Umgebungsbild zumindest zum Teil einen Totwinkelbereich eines Außenspiegels des Kraftfahrzeugs. In Abhängigkeit von einem erfassten Betriebszustand des Kraftfahrzeugs wird automatisch zumindest eine der Bildaufnahmeeinrichtungen ausgewählt und das Umgebungsbild, das von der ausgewählten Bildaufnahmeeinrichtung aufgenommen wird, wird auf der Anzeigeeinrichtung angezeigt.

Die Anzeige eines gesamten Kamerabildes, das heißt, des ganzen von der Bildaufnahmeeinrichtung erfassten Bildes, wie in der DE 10 2015 001 359 A1 offenbart, kann jedoch dazu führen, dass der Detaillierungsgrad des auf der Anzeigeeinrichtung angezeigten Bildes nicht zur Erkennung eines Hindernisses ausreicht. Dies gilt insbesondere dann, wenn nicht nur ein Bild, sondern zwei oder mehr gesamte Kamerabilder auf der Anzeigeeinrichtung abgebildet werden, um mehrere kollisionsgefährdete Bereiche anzuzeigen.

Weitere Sichtsysteme sind aus der DE 10 2013 020 950 A1, DE 10 2015 011 536 A1, DE 10 2015 008 042 B3, DE 10 2012 007 984 A1, DE 10 2013 003 806 A1, der DE 10 2009 045 233 A1, der JP 2010-147516 A, der US 2017/129405 A1, der US 2011/025489 A1 und der EP 3 166 307 A1 bekannt.

### ZUSAMMENFASSUNG

Entsprechend ist es eine Aufgabe der vorliegenden Erfindung, ein Sichtsystem für ein Fahrzeug, insbesondere ein Nutzfahrzeug, vorzusehen, das es dem Fahrer ermöglicht, bei situationsbedingten Fahrmanövern wenigstens einen kollisionsgefährdeten Bereich (Kollisionsbereich) um das Fahrzeug herum schnell und sicher einschätzen zu können, ohne dabei jedoch den Überblick über die Umgebung um das Fahrzeug herum zu verlieren.

Dabei ist unter einem situationsbedingten Fahrmanöver jedes Fahrmanöver zu verstehen, das aufgrund einer vorliegenden oder angestrebten Betriebssituation ausgeführt wird und vom Fahrer des Fahrzeugs und/oder ggf. einem Fahrerassistenzsystem des Fahrersensors initiiert wird. Beispiele für situationsbedingte Fahrmanöver können Vorwärts- bzw. Geradeausfahrten, beispielsweise auf öffentlichen Straßen oder auf Feldern mit oder ohne Bereitstellung einer Arbeitsfunktion des Fahrzeugs, zum Beispiel Bodenbearbeitung oder Mäharbeiten, Abbiegevorgänge, Spurwechsel, Ein- und Ausfahrten in bzw. aus Parkbuchten, etc., oder Rückwärtsfahrten umfassen, beispielsweise auf öffentlichen Straßen oder auf Feldern, Rückwärtseinfahrten in Toreinfahrten oder Straßenmündungen, Anfahrvorgänge an Verladerampen, etc. Situationsbedingte Fahrmanöver umfassen aber auch Fahrzeugstillstände, wie beispielsweise bei Beladevorgängen oder bei Betank- oder Abtankvorgängen.

Kollisionsgefährdete Bereiche sind Bereiche um das Fahrzeug herum, insbesondere das Nutzfahrzeug, die - abhängig von dem jeweiligen situationsbedingten Fahrmanöver - eine erhöhte Kollisionsgefahr bergen, das heißt, in denen die Wahrscheinlichkeit eines Zusammenstoßes des Fahrzeugs mit einem sich in der Umgebung des Fahrzeugs befindlichen Körpers bzw. Hindernisses groß ist. Dabei sind kollisionsgefährdeten Bereichen um das Fahrzeug herum auch Bereiche zuzuordnen, die die Gefahr eines Zusammenstoßes zwischen Anbaugeräten des Fahrzeugs und einem Hindernis bergen, z.B. bei der Ausführung der Arbeitsfunktion, wie beispielsweise einer Bodenbearbeitung oder einem Mähvorgang, aber auch bei Nichtbenutzung der Anbaugeräte. Eine Kollision bzw. ein Zusammenstoß des Fahrzeugs kann mit Kollisionsobjekten, wie weiteren Fahrzeugen, Umgebungsgegenständen, wie Hausecken, Torpfosten, Straßenbeschilderungen, etc., aber auch mit Personen erfolgen.

Die oben genannte Aufgabe wird durch ein Sichtsystem für ein Fahrzeug mit den Merkmalen des Anspruchs 1 gelöst. Bevorzugte Ausführungsformen sind in den abhängigen Ansprüchen angegeben.

Der Erfindung liegt der Gedanke zugrunde, eine Umgebung eines Fahrzeugs, insbesondere eines Nutzfahrzeugs, in jeder Betriebssituation, das heißt, bei Fahrten, Stillständen oder der Ausführung von fahrzeuggebunden Aufgaben, derart zu überwachen und die Ergebnisse der Überwachung derart umzusetzen, dass dem Fahrer, zusätzlich zu wenigstens einem ersten Nahbereich (wie beispielsweise einem vorgeschrieben Sichtfeld) um das Fahrzeug herum, wenigstens ein Kollisionsbereich (kollisionsgefährdeter Bereich) auf einer Wiedergabeeinheit, wie beispielsweise einem Monitor, angezeigt wird. Dabei wird der wenigstens eine Kollisionsbereich derart detailliert auf der Wiedergabeeinheit dargestellt, dass das Erkennen eines Körpers bzw. Hindernisses, das sich in unmittelbarer Kollisionsgefahr mit dem Fahrzeug befindet, für den Fahrer problemlos, das heißt, ohne Anstrengung und weitere Anpassung des Bildes, möglich ist. Der dem Fahrer angezeigte Kollisionsbereich entspricht daher nur einem kollisionsrelevanten Bereich, der auf der Wiedergabeeinheit angezeigt wird, und weist einen derart genauen bzw. hohen Detaillierungsgrad auf, dass der Fahrer die Kollisionsgefahr schnell erkennen und entsprechend handeln kann.

Zur detaillierten Darstellung des Kollisionsbereichs wird ein Teilbereich aus einem von einer an dem Fahrzeug angebrachten Aufnahmeeinheit aufgenommenen Bild ausgeschnitten, d.h. einem Nahbereich um das Fahrzeug, und auf der Wiedergabeeinheit angezeigt. Der auf der Wiedergabeeinheit dargestellte Kollisionsbereich entspricht somit nur einem Bildausschnitt bzw. Teilbereich eines Bildes, das von einer Aufnahmeeinheit am Fahrzeug aufgenommen wurde.

Für jedes Fahrmanöver bzw. unabhängig vom Fahrmanöver, wird dem Fahrer des Fahrzeugs ein Nahbereich um das Fahrzeug, der sogenannte erste Nahbereich, der ein gesetzlich gefordertes Sichtfeld und/oder einen nicht gesetzlich vorgegebenen Sichtbereich beinhalten kann, dargestellt. Liegt der Kollisionsbereich in dem (für das jeweilige Fahrmanöver) anzuzeigenden Sichtfeld oder Sichtbereich, wird ein Teil des Kamerabildes, das das Sichtfeld bzw. den Sichtbereich enthält, ausgeschnitten und dem Fahrer auf der Wiedergabeeinheit zusätzlich zum ganzen Sichtfeld bzw. Sichtbereich z.B. vergrößert angezeigt. Liegt der Kollisionsbereich außerhalb des (für das jeweilige Fahrmanöver) anzuzeigenden Sichtfelds bzw. Sichtbereichs, wird ein Teil eines Kamerabildes, das nicht das Sichtfeld bzw. den Sichtbereich, wohl aber den Kollisionsbereich enthält, ausgeschnitten und dem Fahrer auf der Wiedergabeeinheit zusätzlich zum Sichtfeld bzw. Sichtbereich z.B. vergrößert angezeigt. Der Bildausschnitt wird dabei mittels der Berechnungseinheit stets so gewählt, dass möglichst nur das Hindernis (oder ein Teil des Hindernisses bei entsprechender Größe) und der mit diesem Hindernis möglicherweise kollidierende Teil des Fahrzeugs zu sehen ist.

Das Sichtsystem enthält ferner eine Sensoreinheit, die das jeweils vorliegende situationsbedingte Fahrmanöver durch Empfangen eines entsprechenden Eingangssignals ermittelt und somit schon beim Einleiten eines situationsbedingten Fahrmanövers die für den Fahrer relevanten Kollisionsbereiche anzeigt, dass der Fahrer schnellstmöglich einen Überblick über die Fahrzeugumgebung bekommt. Die Festlegung der entsprechenden Kollisionsbereiche erfolgt ebenfalls basierend auf dem Eingangssignal.

Der den Kollisionsbereich enthaltende Bildausschnitt wird kontinuierlich und in Echtzeit mit Fortsetzen des Fahrmanövers angepasst, das heißt der Bildausschnitt wird bei Annäherung des Fahrzeugs an das Hindernis stetig kleiner gewählt und bei Entfernung des Fahrzeug von dem Hindernis stetig größer gewählt. Durch die Anzeige eines oder mehrerer Kollisionsbereiche zusätzlich zu den vorgeschriebenen Sichtfeldern oder den Sichtbereichen ist es dem Fahrer möglich, sich allein auf das jeweilige Fahrmanöver und die damit verbundenen Kollisionsgefahr zu konzentrieren, ohne dabei das/die relevante/n Sichtfeld/er oder den/die Sichtbereich/e aus den Augen zu verlieren.

Bevorzugter Weise enthält der erste Nahbereich wenigstens ein gesetzlich vorgeschriebenes Sichtfeld. Gesetzlich vorgeschriebene Sichtfelder sind beispielsweise in der ECE R46, der ISO 5721, ISO 5006, ISO 16505, ISO14401 und der EU 167/2013 definiert. Dadurch kann der Fahrer auf einen Blick ein gesetzlich vorgeschriebenes Sichtfeld und wenigstens einen Kollisionsbereich erfassen und so schnell die Situation um das Fahrzeug herum einschätzen und entsprechend handeln.

Weiter bevorzugt ist die Wiedergabeeinheit angepasst, den ersten und ggf. weitere Nahbereiche dauerhaft und in Echtzeit anzuzeigen, um dem Fahrer einen Eindruck der Umgebung um das Fahrzeug herum zu vermitteln, der der Realität möglichst nahekommt. Insbesondere bei der Verwendung des Sichtsystems als Spiegelersatzsystem, bei dem gesetzlich vorgeschriebene Sichtfelder angezeigt werden sollen, kann dadurch gesetzlichen Vorgaben entsprochen werden. Dabei ist es grundsätzlich möglich, nur einen Teil eines gesetzlich vorgeschriebenen Sichtfelds oder eines Sichtbereichs, der kein gesetzlich vorgeschriebenes Sichtfeld enthält, ein gesetzlich vorgeschriebenes Sichtfeld oder einen Sichtbereich vollständig dauerhaft und in Echtzeit dem Fahrer anzuzeigen.

Zusätzlich oder alternativ ist die Wiedergabeeinheit angepasst, den Kollisionsbereich mittels einer Skalierung (Zoom) anzuzeigen, wodurch der Kollisionsbereich dem Fahrer detaillierter angezeigt wird und der Fahrer somit schneller eine etwaige Kollision mit einem Hindernis erkennen kann. Eine Skalierung kann stufenweise oder stufenlos entweder erfolgen. Dabei kann das Ausmaß der Skalierung entweder von der Berechnungseinheit vorgebeben bzw. angepasst werden oder aber von dem Fahrer situationsabhängig eingestellt werden, beispielsweise mittels eines Drehknopfes, eines Steuerknüppels, über ein Touchpad, etc.

Vorzugsweise werden der erste Nahbereich und der Kollisionsbereich auf einer gemeinsamen Wiedergabeeinheit angezeigt, was den Vorteil hat, dass der Fahrer auf einen Blick sowohl den Nahbereich als auch den Kollisionsbereich einsehen kann.

Nach einer bevorzugten Ausführungsform wird der Kollisionsbereich mittels Einblendung auf der gemeinsamen Wiedergabeeinheit angezeigt, was den Vorteil hat, dass der Fahrer den Kollisionsbereich besser von dem bereits angezeigten Nahbereich unterscheiden kann und so einen schnelleren Eindruck über die etwaige Kollisionssituation gewinnt. Beispielsweise können zusätzlich Trennelemente, wie Linien, zur Abgrenzung des Kollisions- und des Nahbereichs voneinander vorgesehen werden.

Alternativ wird der Kollisionsbereich mittels Überblendung (overlay) auf der gemeinsamen Wiedergabeeinheit angezeigt, so dass der Nahbereich nach wie vor hinter dem Kollisionsbereich zu erkennen ist. Bei einer Überblendung werden die beiden überblendeten Bilder im Bereich der Überblendung etwas schwächer dargestellt als in Einzeldarstellung. Im Vorliegenden Fall ist eine Überblendung von Vorteil, wenn der Fahrer nicht nur den Kollisionsbereich einsehen möchte, sondern auch den Teil des Nahbereichs, der von dem angezeigten Kollisionsbereich überdeckt wird.

Es werden mehrere Kollisionsbereiche auf der wenigstens einen Wiedergabeeinheit angezeigt, um dem Fahrer alle bei einem situationsbedingten Fahrmanöver auftretenden Kollisionsgefahren gleichzeitig anzuzeigen.

Das von der Sensoreinheit ermittelte Eingangssignal kann beispielsweise durch eine manuelle Eingabe des Fahrers und/oder eine Bewegung bzw. Handlung des Fahrers erzeugt werden. Folgende Handlungen des Fahrers sind beispielhaft unter einer manuellen Eingabe des Fahrers zu verstehen: Einlegen des Rückwärtsgang, Betätigen des Blinker, Betätigen einer Taste, an das sich ein situationsbedingtes Fahrmanöver anschließt, wie beispielsweise Betätigen der Warnblinkanlage, Starten eines fahrzeugabhängigen Prozesses (Ausfahren eines Überladerohrs am Mähdrescher, Öffnen der Türen bei Bussen,...), etc. Auch ein entsprechendes Signal eines Fahrerassistenzsystems kann alternativ oder zusätzlich das von der Sensoreinheit ermittelte Eingangssignal sein.

Alternativ und/oder zusätzlich kann das Eingangssignal durch Erfassung der Position des Fahrzeugs erzeugt werden. Eine Erfassung der Position des Fahrzeugs kann durch GPS (Global Positioning System), Galileo, Compass, Glonass oder andere Positionierungssysteme erfolgen, die beispielsweise satellitengestützt sind. Diese ermöglicht eine relativ genaue Vorhersage einer Position des Fahrzeugs zu einem weiteren Körper und kann mitunter sogar dazu verwendet werden, die Position des Fahrzeugs zu einem anderen sich bewegenden Körper anzugeben und eine Kollisionsprognose abzugeben.

Weiter alternativ oder zusätzlich kann das Eingangssignal durch Überwachung der Umgebung um das Fahrzeug herum erzeugt werden, wobei die Überwachung um das Fahrzeug herum über die wenigstens eine Aufnahmeeinheit und/oder eine zusätzliche Überwachungseinheit erfolgt. Durch eine Überwachung der Fahrzeugumgebung kann eine mögliche Kollisionsgefahr zuverlässig vorausgesagt werden und somit ein potentieller Kollisionsbereich zuverlässig festgelegt werden. Eine Kombination verschiedener Eingangssignale führt zu einer noch zuverlässigeren Kollisionsvoraussage. Mögliche zusätzliche Überwachungseinheiten können zusätzliche Aufnahmeeinheiten, Radarsensoren, Ultraschallsensoren, Sensoren mit Objekterkennung, etc. sein.

Nach einer bevorzugten Ausführungsform enthält das Sichtsystem wenigstens zwei Wiedergabeeinheiten, wobei wenigstens der Kollisionsbereich auf derjenigen der wenigstens zwei Wiedergabeeinheiten angezeigt wird, die der Fahrer aufgrund seiner natürlichen Haltung und Blickrichtung abhängig von dem situationsbedingten Fahrmanöver betrachtet. Damit wird dem Fahrer der Kollisionsbereich stets auf derjenigen Wiedergabeeinheit angezeigt, die er während des situationsbedingten Fahrmanövers betrachtet bzw. in deren Richtung er während des Fahrmanövers blickt. Mit anderen Worten sieht der Fahrer den Kollisionsbereich somit stets auf der Wiedergabeeinheit, die in seiner Blickrichtung während des Fahrmanövers liegt. Wechselt der Blick des Fahrers während des Fahrmanövers oft die Richtung, wechselt somit auch die Anzeige des Kollisionsbereichs abhängig von der Blickrichtung des Fahrers von einer zur anderen Wiedergabeeinheit und ggf. zurück. Beabsichtigt der Fahrer beispielsweise im Rahmen eines Abbiegevorgangs eine Rechtskurve zu fahren und deutet dies mit einer Betätigung des Blinkers und damit mit einem entsprechenden Blinksignal an, ist davon auszugehen, dass der Fahrer seinen Blick während des Abbiegevorgangs nach rechts richtet. Entsprechend werden dem Fahrer wenigstens die Kollisionsbereiche (betrachtet in Fahrtrichtung rechts vorne und links hinten am Fahrzeug) auf dem rechten von zwei in der Fahrerkabine vorgesehenen Monitoren anzeigen. So kann zuverlässig eine ergonomische Anzeige der Kollisionsbereiche vorgesehen werden. Die bei den verschiedenen Fahrmanövern üblicherweise eingenommenen Blickrichtungen des Fahrers können empirisch ermittelt werden, beispielsweise in einer Datenbank gespeichert werden und im Bedarfsfall abgerufen werden. Alternativ kann die Blickrichtung des Fahrers auch durch Erfassen von Fahrerdaten, wie beispielsweise Fahrerbewegungen oder Augenbewegungen, z.B. mittels eye-tracking, ermittelt werden.

Nach einer weiteren bevorzugten Ausführungsform enthält das Sichtsystem ferner wenigstens eine weitere Wiedergabeeinheit, wobei der Nahbereich und der Kollisionsbereich getrennt auf der wenigstens einen Wiedergabeeinheit und der wenigstens einen weiteren Wiedergabeeinheit angezeigt werden.

Vorzugsweise enthält das Sichtsystem ferner wenigstens eine zweite Aufnahmeeinheit, die angepasst ist, wenigstens einen zweiten Nahbereich um das Fahrzeug herum aufzunehmen, wobei der wenigstens eine erste Nahbereich und der wenigstens eine zweite Nahbereich aneinander angrenzen oder, alternativ, nicht aneinander angrenzen. Durch mehrere Aufnahmeeinheiten kann die Umgebung um das Fahrzeug herum besser überwacht werden und mögliche Kollisionsbereiche können zuverlässiger ermittelt werden.

Vorzugsweise entspricht der Kollisionsbereich einem Teil des ersten Nahbereichs. Der Kollisionsbereich ist somit ein Bildausschnitt des dem ersten Nahbereich entsprechenden Bildes, wodurch der Fahrer einen in dem Nahbereich liegenden Kollisionsbereich detaillierter angezeigt bekommt.

Nach einer bevorzugten Ausführungsform kann der Kollisionsbereich einem Teil des zweiten Nahbereichs entsprechen. Weiter bevorzugt können der Kollisionsbereich und der erste Nahbereich oder der zweite Nahbereich aneinander angrenzen. Dadurch erhält der Fahrer einen schnellen Überblick über den Kollisionsbereich und einen weiteren Nahbereich und kann so die Situation um das Fahrzeug herum sowohl hinsichtlich einer etwaigen Kollisionsgefahr als auch einer weiteren Information (z.B. ob Fahrmanöver wie geplant erfolgt) besser einschätzen.

### KURZE BESCHREIBUNG DER ZEICHNUNGEN

Im Folgenden wird die Erfindung beispielhaft unter Bezugnahme auf die angehängten Figuren beschrieben, in denen:
FIG. 1 einen schematischen Aufbau des Sichtsystems gemäß der Erfindung zeigt,
FIG. 2 eine schematische Draufsicht auf ein Fahrzeug mit Sichtbereichen und Kollisionsbereichen darum herum angeordnet zeigt;
FIG. 3 eine schematische Ansicht zweier Wiedergabeeinheiten, eines Fahrers und zweier Kollisionsbereiche zeigt;
Fig. 4a eine schematische Ansicht zweier Wiedergabeeinheiten mit darauf abgebildeten Sichtbereichen und Kollisionsbereichen gemäß einer ersten Ausführungsform zeigt;
Fig. 4b eine schematische Draufsicht auf ein Nutzfahrzeug zeigt, um das die in Fig. 4a abgebildeten Sichtbereiche und Kollisionsbereiche darum herum angeordnet sind;
Fig. 5a eine schematische Ansicht zweier Wiedergabeeinheiten mit darauf abgebildeten Sichtbereichen und Kollisionsbereichen gemäß einer zweiten Ausführungsform zeigt;
Fig. 5b eine schematische Draufsicht auf ein Nutzfahrzeug zeigt, um das die in Fig. 5a abgebildeten Sichtbereiche und Kollisionsbereiche darum herum angeordnet sind;
Fig. 6a eine schematische Ansicht zweier Wiedergabeeinheiten mit darauf abgebildeten Sichtbereichen und Kollisionsbereichen gemäß einer dritten Ausführungsform zeigt;
Fig. 6b eine schematische Draufsicht auf ein Nutzfahrzeug zeigt, um das die in Fig. 6a abgebildeten Sichtbereiche und Kollisionsbereiche darum herum angeordnet sind;
Fig. 7a eine schematische Ansicht zweier Wiedergabeeinheiten mit darauf abgebildeten Sichtbereichen und Kollisionsbereichen gemäß einer vierten Ausführungsform zeigt;
Fig. 7b eine schematische Draufsicht auf ein Nutzfahrzeug zeigt, um das die in Fig. 7a abgebildeten Sichtbereiche und Kollisionsbereiche darum herum angeordnet sind;
Fig. 8a eine schematische Ansicht zweier Wiedergabeeinheiten mit darauf abgebildeten Sichtbereichen und Kollisionsbereichen gemäß einer fünften Ausführungsform zeigt;
Fig. 8b eine schematische Draufsicht auf ein Nutzfahrzeug zeigt, um das die in Fig. 8a abgebildeten Sichtbereiche und Kollisionsbereiche darum herum angeordnet sind;
Fig.9a eine schematische Ansicht zweier Wiedergabeeinheiten mit darauf abgebildeten Sichtbereichen und Kollisionsbereichen gemäß einer sechsten Ausführungsform zeigt; und
Fig. 9b eine schematische Draufsicht auf ein Nutzfahrzeug zeigt, um das die in Fig. 9a abgebildeten Sichtbereiche und Kollisionsbereiche darum herum angeordnet sind.

### DETAILLIERTE BESCHREIBUNG DER ERFINDUNG

In der nachfolgenden Beschreibung wird die Richtung, in der sich ein Fahrzeug nach vorne bewegt, als Vorwärtsrichtung und die Richtung, in der sich ein Fahrzeug nach hinten bewegt, das heißt, in der ein Fahrzeug zurücksetzt, als Rückwärtsrichtung bezeichnet. Die Erstreckung des Fahrzeugs in der Vorwärts-/Rückwärtsrichtung wird als Fahrzeuglänge und die Erstreckung des Fahrzeugs quer/senkrecht zu der Vorwärts-/Rückwärtsrichtung wird als Fahrzeugbreite bezeichnet. Die Vorwärts-Rückwärts-Richtung wird auch als Längsrichtung des Fahrzeugs bezeichnet.

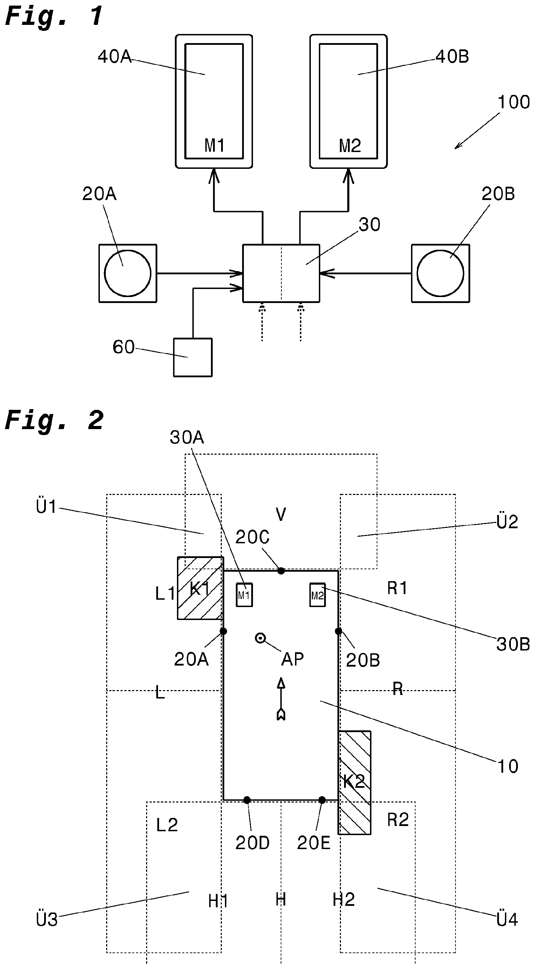

FIG. 1 zeigt einen schematischen Aufbau eines Sichtsystems 100 eines Fahrzeugs (nicht gezeigt) gemäß der Erfindung. Das Sichtsystem 100 weist zwei Aufnahmeeinheiten 20A, 20B, eine Berechnungseinheit 30 und zwei Wiedergabeeinheiten 40A, 40B auf. Die Aufnahmeeinheiten 20A, 20B können Kameras, Bildsensoren, oder ähnliches sein. Die Wiedergabeeinheiten 40A, 40B können Monitore M1, M2 sein. Die Berechnungseinheit 30 ist zur Datenverarbeitung bzw. Datenbearbeitung, zum Beispiel der von den Aufnahmeeinheiten 20A, 20B aufgenommenen Bilddaten, ausgestaltet und kann ein Prozessor, wie eine ECU, sein. Die Aufnahmeeinheiten 20A, 20B sind mit der Berechnungseinheit 30 derart verbunden, dass die von den Aufnahmeeinheiten 20A, 20B aufgenommenen Bilddaten an die Berechnungseinheit weitergeleitet werden können. Die Berechnungseinheit 30 ist jeweils mit einer der Wiedergabeeinheiten 40A, 40B derart verbunden, dass die von der Berechnungseinheit bearbeiteten Bilddaten an die Wiedergabeeinheiten 40A, 40B weitergeleitet werden können. Die Berechnungseinheit 30 kann pro Aufnahmeeinheit 20A, 20B und Wiedergabeeinheit 40A, 40B je einen Prozessor aufweisen, der jeweils mit einer entsprechenden Aufnahmeeinheit 30A, 30B und einer entsprechenden Wiedergabeeinheit 40A, 40B verbunden ist. Alternativ kann die Berechnungseinheit 30 einen gemeinsamen Prozessor für alle Aufnahmeeinheiten 30A, 30B und Wiedergabeeinheiten 40A, 40B aufweisen. Zudem empfängt die Berechnungseinheit 30 Signale einer Sensoreinheit 60 zur Erfassung einer Betriebssituation bzw. eines situationsbedingten Fahrmanövers. Signale, die situationsbedingte Fahrmanöver angeben, können eines oder mehrere aus den folgenden Signalen sein: Das Einlegen des Rückwärtsgang, das Betätigen des Blinker, das Betätigen einer Taste, an das sich ein situationsbedingtes Fahrmanöver anschließt, wie beispielsweise Betätigen der Warnblinkanlage, Starten eines fahrzeugabhängigen Prozesses (Ausfahren eines Überladerohrs am Mähdrescher, Öffnen der Türen bei Bussen,...), etc. Auch ein entsprechendes Signal eines Fahrerassistenzsystems kann alternativ oder zusätzlich das von der Sensoreinheit ermittelte Eingangssignal sein. Die Berechnungseinheit 30 kann weitere Daten zusätzlich zu den Bilddaten der Aufnahmeeinheiten 20A, 20B empfangen (dargestellt mit gestrichelten Pfeilen in Fig. 1), wie beispielsweise Daten weiterer Sensoren.

Werden Spiegelersatzsysteme zum Einsehen gesetzlich vorgeschriebener Sichtfelder oder von Sichtbereichen, die nicht gesetzlich vorgeschrieben sind, verwendet, weisen Nutzfahrzeuge üblicherweise zwei Wiedergabeeinheiten auf, die in der Fahrerkabine, normalerweise an der linken bzw. der rechten A-Säule, montiert sind. Auf der Wiedergabeeinheit, die an der linken A-Säule montiert ist, wird das Kamerabild oder werden die Kamerabilder einer oder mehrerer an der linken Außenseite des Fahrzeugs angebrachten Kameras gezeigt. Auf der Wiedergabeeinheit, die an der rechten A-Säule montiert ist, wird das Kamerabild oder werden die Kamerabilder einer oder mehrerer an der rechten Außenseite des Fahrzeugs angebrachten Kameras gezeigt. Bei der Anzeige gesetzlich vorgeschriebener Sichtfelder muss/müssen das Bild/die Bilder der Kameras auf der linken Außenseite auch stets auf der linken Wiedergabeeinheit zu sehen sein, während das Bild/die Bilder der Kameras auf der rechten Außenseite auch stets auf der rechten Wiedergabeeinheit zu sehen sein müssen. Ein seitenvertauschtes Anzeigen der rechten und linken Bilder, d.h. ein Anzeigen des von der rechten Kamera aufgenommenen Bildes auf der linken Wiedergabeeinheit und entsprechend das Anzeigen des von der linken Kamera aufgenommenen Bildes auf der rechten Wiedergabeeinheit, ist bei gesetzlich vorgeschriebenen Sichtfelder nicht zulässig. Werden mehrere Bilder pro Wiedergabeeinheit angezeigt, ist es jedoch zulässig, diese nebeneinander, übereinander, ineinander, oder auf ähnliche Art und Weise anzuzeigen, solange ein gesetzlich vorgeschriebenes Sicht nicht von einem anderen Sichtfeld oder Sichtbereich überdeckt wird. Zur Wiedergabe weiterer Bereiche können nach Bedarf zusätzliche Wiedergabeeinheiten vorgesehen sein.

Fig. 2 zeigt schematisch eine Draufsicht auf ein Fahrzeug 10. Der Pfeil gibt die Fahrtrichtung des Fahrzeugs 10 nach vorne an. In dem Fahrzeug 10 befinden sich zwei Monitore M1, M2. Das Bezugszeichen AP bezeichnet den Augpunkt eines (nicht gezeigten) Fahrers, der auf dem (nicht gezeigten) Fahrersitz des Fahrzeugs 10 sitzt. An den Außenseitenflächen des Fahrzeugs 10 sind fünf Aufnahmeeinheiten 20A, 20B, 20C, 20D, 20E angebracht: Die Aufnahmeeinheit 20A befindet sich auf der linken Seite des Fahrzeugs 10. Die Aufnahmeeinheit 20B befindet sich auf der rechten Seite des Fahrzeugs 10. Die Aufnahmeeinheit 20C befindet sich auf der Vorderseite des Fahrzeugs 10. Die Aufnahmeeinheiten 20D, 20E befinden sich auf der Rückseite des Fahrzeugs 10. Die Aufnahmeeinheiten 20A, 20B, 20C, 20D, 20E erfassen vier Nahbereiche L, R, V, H um das Fahrzeug 10 herum. Die Aufnahmeeinheit 20A erfasst einen Nahbereich L auf der linken Seite des Fahrzeugs 10. Die Aufnahmeeinheit 20B erfasst einen Nahbereich R auf der rechten Seite des Fahrzeugs 10. Die Aufnahmeeinheit 20C erfasst einen Nahbereich V vor dem Fahrzeug 10. Die Aufnahmeeinheiten 20D, 20E erfassen einen Nahbereich H hinter dem Fahrzeug 10.

Der Nahbereich L befindet sich in der Draufsicht aus Fig. 2 links neben dem Fahrzeug 10. Die Erstreckung des Nahbereichs L neben dem Fahrzeug 10 in der Längsrichtung des Fahrzeugs 10 ist größer als die Länge des Fahrzeugs 10 selbst, wobei sich der Nahbereich L weiter über das hintere Ende des Fahrzeugs 10 hinaus erstreckt als über das vordere Ende des Fahrzeugs 10. Der Nahbereich L ist in der Breitenrichtung des Fahrzeugs 10 in zwei Nahbereiche L1, L2 unterteilt, wobei der Nahbereich L1 in der Längsrichtung vor dem Nahbereich L2 liegt. Der Nahbereich R befindet sich in der Draufsicht aus Fig. 2 rechts neben dem Fahrzeug 10 und weist wie der Nahbereich L zwei Nahbereiche R1, R2 auf. Im Übrigen entspricht der Nahbereich R dem Nahbereich L und entsprechende Erläuterungen werden weggelassen. Der Nahbereich V erstreckt sich in Vorwärtsrichtung vor dem Fahrzeug 10. Die Erstreckung des Nahbereichs V vor dem Fahrzeug 10 in der Breitenrichtung des Fahrzeugs 10 ist größer als die Breite des Fahrzeugs 10 selbst. Der Nahbereich H erstreckt sich in Vorwärtsrichtung hinter dem Fahrzeug 10. Die Erstreckung des Nahbereichs H vor dem Fahrzeug 10 in der Breitenrichtung des Fahrzeugs 10 ist größer als die Breite des Fahrzeugs 10 selbst und größer als die Erstreckung des Nahbereichs V in der Breitenerstreckung des Fahrzeugs 10. Die Erstreckung des Nahbereichs H weist auch eine größere Erstreckung in der Vorwärtsrichtung auf als der Nahbereich V. Der Nahbereich H ist in der Längsrichtung des Fahrzeugs 10 in zwei Nahbereiche H1, H2 unterteilt, wobei der Nahbereich H1 in der Breitenrichtung links neben dem Nahbereich H2 liegt. Aufgrund ihrer größeren Erstreckungen als die Länge und Breite des Fahrzeugs 10 bilden die Bereiche L1 und V diagonal links vor dem Fahrzeug 10 einen Überscheidungsbereich Ü1, und die Bereiche R1 und V bilden diagonal rechts vor dem Fahrzeug 10 einen Überschneidungsbereich Ü2. Ebenso bilden die Bereiche L2 und H1 diagonal links hinter dem Fahrzeug 10 einen Überscheidungsbereich Ü3, und die Bereiche R2 und H2 bilden diagonal rechts hinter dem Fahrzeug 10 einen Überschneidungsbereich Ü4. Die Nahbereiche 1, 2, 3, 4 können gesetzlich vorgeschriebene Sichtfelder und/oder weitere (mitunter nicht gesetzlich vorgegebene) Sichtbereiche enthalten.

Der Nahbereich L1 enthält einen Kollisionsbereich K1. Der Kollisionsbereich K1 ist ein Bildausschnitt aus dem Nahbereich L1 und erstreckt sich unmittelbar an die linke Fahrzeugaußenseite angrenzend und in den Überschneidungsbereich Ü1 hinein. Der Nahbereich R2 enthält einen Kollisionsbereich K2. Der Kollisionsbereich K2 ist ein Bildausschnitt aus dem Nahbereich R2 und erstreckt sich unmittelbar an die rechte Fahrzeugaußenseite angrenzend und in den Überschneidungsbereich Ü4 hinein.

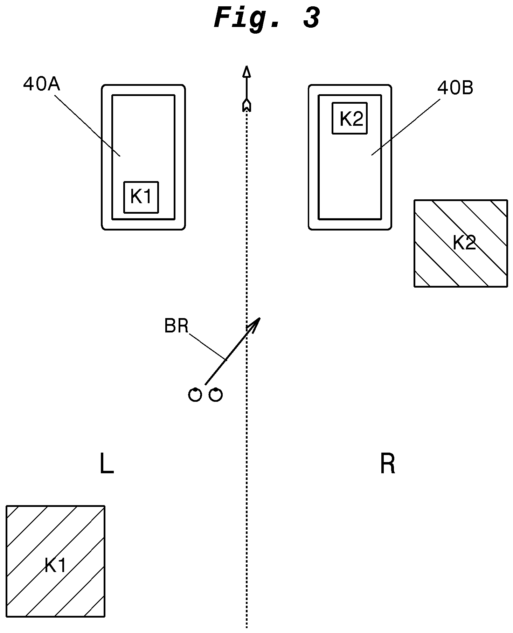

Fig. 3 zeigte eine schematische Ansicht zweier Wiedergabeeinheiten 40A, 40B, eines Fahrers und zweier Kollisionsbereiche K1, K2. Der Pfeil gibt die Fahrrichtung des (nicht gezeigten) Fahrzeugs an. Die gepunktete Linie unterhalb des Pfeils gibt die Fahrzeuglängsachse an. Der Kollisionsbereich K1 liegt links neben dem Fahrzeug und der Kollisionsbereich K2 liegt rechts neben dem Fahrzeug, wobei der Kollisionsbereich K2 in Vorwärtsrichtung weiter vorne liegt als der Kollisionsbereich K1. Die Hauptblickrichtung BR des nur schematisch mittels eines Augenpaars dargestellten Fahrers zeigt in Fig. 3 diagonal nach rechts vorne zu der Wiedergabeeinheit 40B. Um dem Fahrer eine möglichst schnelle Einschätzung der Umgebung um das Fahrzeug herum, insbesondere der für den Fahrer nicht oder nur schlecht einsehbaren Kollisionsbereiche K1 und K2 zu geben, wird der Kollisionsbereich K1 auf der linken Wiedergabeeinheit in deren unterem Bereich und der Kollisionsbereich K2 auf der rechten Wiedergabeeinheit in deren oberen Bereich angezeigt. Durch eine Anordnung eines Kollisionsbereichs, der neben einem hinteren Teil des Fahrzeugs liegt, in dem unteren Bereich eines Monitors und andersherum eine Anordnung eines Kollisionsbereichs, der neben einem vorderen Teil des Fahrzeugs liegt, in dem oberen Bereich eines (weiteren) Monitors, d.h. eine unterschiedliche Anordnung der Kollisionsbereiche auf den Monitoren, wird dem Fahrer eine schnelle Einschätzung einer etwaigen Kollisionsgefahr ermöglicht. Mit anderen Worten ist es dem Fahrer durch eine solche Anordnung intuitiv leicht möglich, durch einen Blick auf den Monitor die beiden Kollisionsbereiche auseinanderzuhalten und den entsprechenden Bereichen um das Fahrzeug herum zuzuordnen.

Die Auswahl, auf welcher Wiedergabeeinheit ein Kollisionsbereich angezeigt wird, kann aufgrund eines situationsbedingten Fahrmanövers und der damit einhergehenden vorhersehbaren Blickrichtung erfolgen. Zeigt der Fahrer beispielsweise durch Betätigen des rechten Blinkers, dass er beabsichtigt, nach rechts abzubiegen, wird der Blick des Fahrers beim Abbiegevorgang erfahrungsgemäß auch nach rechts wandern. Ein beim Abbiegevorgang auftretender Kollisionsbereich wird dem Fahrer dann auf der rechten Wiedergabeeinheit angezeigt, um dem Fahrer eine schnelle und ergonomische Einschätzung des/der Kollisionsbereichs/Kollisionsbereiche beim Abbiegevorgang zu ermöglichen. Alternativ kann die Auswahl, auf welcher Wiedergabeeinheit ein Kollisionsbereich angezeigt wird, durch Beobachtung und Ermittlung des Fahrerverhaltens erfolgen. Dreht der Fahrer beispielsweise den Kopf während eines situationsbedingten Fahrmanövers in Richtung einer der beiden Wiedergabeeinheiten, kann diese Kopfbewegung oder allein nur die Augenbewegung von einem speziellen Sensor ermittelt werden und die Anzeige auf der Wiedergabeeinheit erfolgen, die von dem Fahrer augenblicklich betrachtet wird.

Der Kollisionsbereich K1 kann auf der Wiedergabeeinheit als Bild im Bild (picture-inpicture), als Einblendung, als Überblendung oder im Split-Screen-Verfahren angezeigt werden. Zusätzlich kann die Anzeige des Kollisionsbereichs K1 mit einem akustischen Signal verbunden sein.

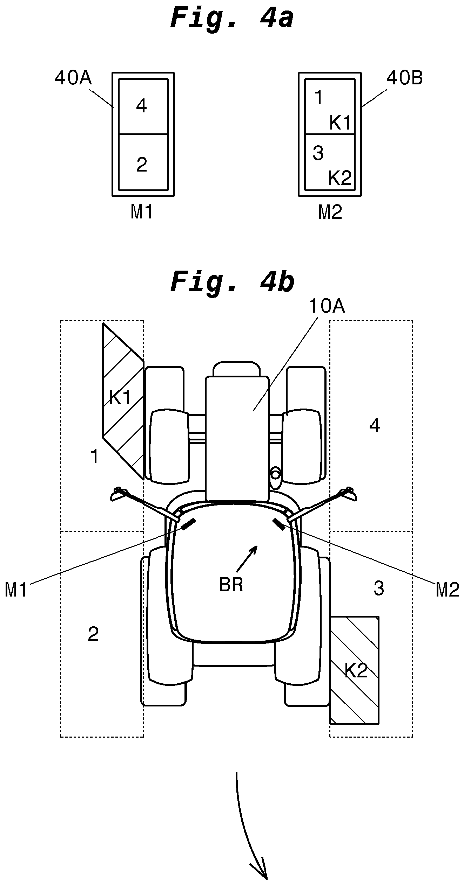

Fig. 4a zeigt eine schematische Ansicht zweier Wiedergabeeinheiten 40A, 40B mit darauf abgebildeten Nahbereichen 1, 2, 3, 4, mit Sichtfeldern bzw. Sichtbereichen, und Kollisionsbereichen K1, K2 gemäß einer ersten Ausführungsform. In Fig. 4b ist in einer Draufsicht die zu Fig. 4a gehörende Anordnung der Nahbereiche 1, 2, 3, 4 und der Kollisionsbereiche K1, K2 um ein Fahrzeug, als Beispiel ein landwirtschaftlicher Traktor 10A, zu sehen. In der Fahrerkabine weist der Traktor 10A zwei Monitore M1, M2 auf, die den Wiedergabeeinheiten 40A und 40B aus Fig. 4a entsprechen.

Um den Traktor 10A sind vier Nahbereiche (Sichtbereiche bzw. -felder) angeordnet, die von Aufnahmeeinheiten (nicht gezeigt) aufgenommen werden, die an dem Traktor 10A an entsprechenden Stellen montiert sind. Der Nahbereich 1 befindet sich in Vorwärtsrichtung links neben dem linken Vorderrad. Der Nahbereich 2 befindet sich in Vorwärtsrichtung links neben dem linken Hinterrad. Der Nahbereich 3 befindet sich in Vorwärtsrichtung rechts neben dem rechten Hinterrad. Der Nahbereich 4 befindet sich in Vorwärtsrichtung rechts neben dem rechten Vorderrad. Die Nahbereiche 1 und 2 bzw. die Nahbereiche 3 und 4 grenzen in Längsrichtung des Traktors 10A aneinander an. Alle vier Nahbereiche 1, 2, 3, 4 grenzen an ihrer dem Traktor 10A zugewandten Seite an den Traktor 10A an.

Der in Fig. 4b gezeigte Traktor 10A ist im Begriff, eine Kurvenfahrt nach rechts hinten in Rückwärtsfahrt (siehe gebogener Pfeil im unteren Teil aus Fig. 4b) auszuführen. Um den kollisionsgefährdeten Nahbereich 3 beobachten zu können, blickt der Fahrer bei solch einem Fahrmanöver üblicherweise in den rechten Außenspiegel bzw. bei einem Spiegelersatzsystem auf den rechten Monitor M2, der das Bild einer rechts außen montierten Bildaufnahmeeinheit (nicht gezeigt) zeigt. Die Blickrichtung BR des Fahrers verläuft in Fig. 4b somit nach rechts vorne (siehe Pfeil BR in der Fahrerkabine).

Bei dem in Fig. 4b gezeigten Fahrmanöver (Kurvenfahrt nach rechts hinten) entsteht im Bereich des linken Vorderrads ein Kollisionsbereich K1 und im Bereich des rechten Hinterrads ein Kollisionsbereich K2. Genauer gesagt, wird bei der gezeigten Kurvenfahrt nach rechts hinten der vordere Teil des Traktors 10A nach links ausscheren, während der hintere Teil des Traktors nach rechts ausscheren wird. Es besteht somit die Gefahr, dass der Traktor 10A vorne links und hinten rechts mit einem anderen Körper zusammenstößt. Eine solche Kollision erfolgt dann zwischen einem Körper und dem linken Vorderreifen/dem linken vorderen Kotflügel bzw. einem Körper und dem rechten Hinterreifen/dem rechten hinteren Kotflügel. Daher entspricht der Kollisionsbereich K1 nicht dem gesamten Nahbereich 1, sondern lediglich dem Teilbereich des Nahbereichs 1, der sich nahe des linken Vorderreifens bzw. nahe des linken vorderen Kotflügels befindet. Analog entspricht der Kollisionsbereich K2 dem Teilbereich des Nahbereichs 3, der sich nahe des rechten Hinterreifens bzw. nahe des rechten hinteren Kotflügels befindet. In Fig. 4b sind die beiden Kollisionsbereiche K1, K2 als schraffierte Flächen dargestellt und stellen allgemein je einen Bereich dar, der bei einem situationsbedingten Fahrmanöver die größte Gefahr eines Zusammenstoßes zwischen dem Traktor 10A und einem weiteren Körper (nicht gezeigt) birgt.

In Fig. 4a ist zu sehen, dass die Kollisionsbereiche K1, K2 dem Fahrer aufgrund der zu erwartenden Blickrichtung (siehe Pfeil BR nach rechts vorne in Fig. 4b) auf dem rechten Monitor M2 der beiden in der Fahrerkabine angeordneten Monitore M1, M2 angezeigt werden, um dem Fahrer unter ergonomischen Gesichtspunkten eine schnelle Erfassung der beiden Kollisionsbereiche K1, K2 zu ermöglichen. So kann der Fahrer ohne unnötiges Drehen des Kopfes schnell und zuverlässig die Kollisionsgefahr in den Kollisionsbereichen K1, K2 einschätzen. In dem in Fig. 4a gezeigten Beispiel wird der Nahbereich 1 zusammen mit dem Kollisionsbereich K1 in der oberen Hälfte des Monitors M2 angezeigt, wohingegen der Nahbereich 3 zusammen mit dem Kollisionsbereich K2 in der unteren Hälfte des Monitors M2 angezeigt. Auf dem linken Monitor M1 werden die übrigen beiden Nahbereiche 2 und 4 angezeigt, wobei der Nahbereich 4 in einer oberen Hälfte und der Nahbereich 2 in einer unteren Hälfte des Monitors M2 angezeigt wird. Somit wird bei der in Fig. 4a und Fig. 4b gezeigten Ausführungsform, der einem Nahbereich 1, 3 entnommene Kollisionsbereich K1, K2 mit dem entsprechenden Nahbereich 1, 3 zusammen auf der Wiedergabeeinheit 40A, 40B angezeigt wird. Damit kann der Fahrer abhängig von dem jeweiligen Fahrmanöver schnell die relevanten Nahbereiche 1, 3 und gleichzeitig die Bereiche K1, K2 mit einer erhöhten Kollisionsgefahr mit größerer Detailtiefe verglichen mit der üblichen Darstellung des jeweiligen Nahbereichs 1, 3, einsehen. Es ist aber auch möglich, Nahbereiche mit Kollisionsbereichen zusammen anzuzeigen, die nicht den jeweiligen Nahbereichen entnommen wurden. Als mögliche (nicht gezeigte) Modifikation der in Fig. 4b gezeigten Ausführungsform könnte beispielsweise der Nahbereich 2 zusammen mit dem Kollisionsbereich K2 und der Nahbereich 4 zusammen mit dem Kollisionsbereich 1 angezeigt werden, um dem Fahrer schnell einen Eindruck über die gesamte Fahrzeugumgebung zu geben.

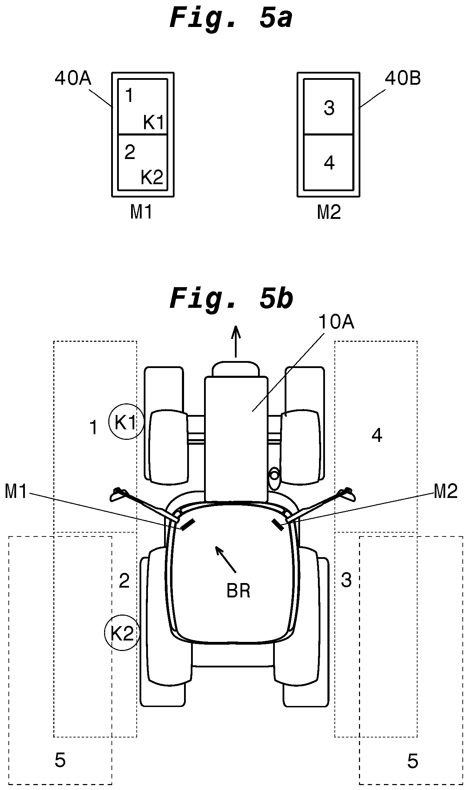

Fig. 5a zeigt eine schematische Ansicht zweier Wiedergabeeinheiten 40A, 40B mit darauf abgebildeten Nahbereichen 1, 2, 3, 4, 5, z.T. mit Sichtfeldern, und Kollisionsbereichen K1, K2 gemäß einer zweiten Ausführungsform. In Fig. 5b ist die zu Fig. 5a gehörende Anordnung der Nahbereiche 1, 2, 3, 4 und der Kollisionsbereiche K1, K2 zu sehen. Wie in Fig. 4b, ist auch in Fig. 5b ein landwirtschaftlicher Traktor 10A in einer Draufsicht gezeigt, der in der Fahrerkabine zwei Monitore aufweist. Die um den Traktor 10A herum angeordneten Nahbereiche 1, 2, 3, 4 entsprechen den Nahbereichen 1, 2, 3, 4 wie in Fig. 4b gezeigt. Daher wird eine Beschreibung der Nahbereiche 1, 2, 3, 4 in Fig. 5b weggelassen. Zusätzlich ist in Fig. 5b ein weiterer, zu den Nahbereichen 2, 3 alternativer Nahbereich 5 (gestrichelte Linie) zu sehen. Der Nahbereich 5 verläuft jeweils auf Höhe eines linken bzw. rechten Hinterrads des Traktors 10A, jedoch im Vergleich zu den Nahbereichen 2 und 3 etwas beabstandet zu dem jeweiligen Hinterreifen, und erstreckt sich etwas weiter nach hinten als die Nahbereiche 2 und 3.

Der in Fig. 5b gezeigte Traktor 10A führt eine Geradeausfahrt durch (siehe Pfeil im oberen Teil aus Fig. 5b). Um die Fahrzeugumgebung beobachten zu können, blickt der Fahrer bei einer Geradeausfahrt überwiegend in den linken Außenspiegel bzw. bei einem Spiegelersatzsystem auf den linken Monitor M1, der das Bild einer links außen montierten Bildaufnahmeeinheit (nicht gezeigt) zeigt. Die Blickrichtung BR des Fahrers verläuft in Fig. 5b somit nach links vorne (siehe Pfeil BR in der Fahrerkabine).

Bei dem in Fig. 5b gezeigten Fahrmanöver (Geradeausfahrt) kann im Bereich des linken Vorderrads ein Kollisionsbereich K1 und im Bereich des linken Hinterrads ein Kollisionsbereich K2 entstehen, beispielsweise durch ein weiteres Fahrzeug, das den Traktor 10A überholt. Es besteht somit die Gefahr, dass der Traktor 10A vorne und hinten links mit einem anderen Körper zusammenstößt. Eine solche Kollision erfolgt dann zwischen einem Körper und dem linken Vorderreifen/dem linken vorderen Kotflügel bzw. einem Körper und dem linken Hinterreifen/dem linken hinteren Kotflügel. Daher entspricht der Kollisionsbereich K1, wie bei der in Fig. 4b gezeigten Ausführungsform, nicht dem gesamten Nahbereich 1, sondern lediglich einem Teilbereich des Nahbereichs 1, der sich nahe des linken Vorderreifens bzw. nahe des linken vorderen Kotflügels befindet. Analog entspricht der Kollisionsbereich K2 einem Teilbereich des Nahbereichs 2, der sich nahe des linken Hinterreifens bzw. nahe des linken hinteren Kotflügels befindet. In Fig. 5b sind die beiden Kollisionsbereiche K1, K2 als kreisförmige Flächen dargestellt.

In Fig. 5a ist zu sehen, dass die Kollisionsbereiche K1, K2 dem Fahrer aufgrund der zu erwartenden Blickrichtung (siehe Pfeil BR nach links vorne in Fig. 5b) auf dem linken Monitor M1 der beiden in der Fahrerkabine angeordneten Monitore M1, M2 angezeigt werden, um dem Fahrer, wie bereits bei der in Fig. 4a gezeigten Ausführungsform, unter ergonomischen Gesichtspunkten eine schnelle Erfassung der beiden Kollisionsbereiche K1, K2 zu ermöglichen. In dem in Fig. 5a gezeigten Beispiel wird der Nahbereich 1 zusammen mit dem Kollisionsbereich K1 in der oberen Hälfte des Monitors M1 angezeigt, wohingegen der Nahbereich 2 zusammen mit dem Kollisionsbereich K2 in der unteren Hälfte des Monitors M1 angezeigt wird. Auf dem rechten Monitor M2 werden die übrigen beiden Nahbereiche 3 und 4 angezeigt, wobei der Nahbereich 3 in einer oberen Hälfte und der Nahbereich 4 in einer unteren Hälfte des Monitors M2 angezeigt wird.

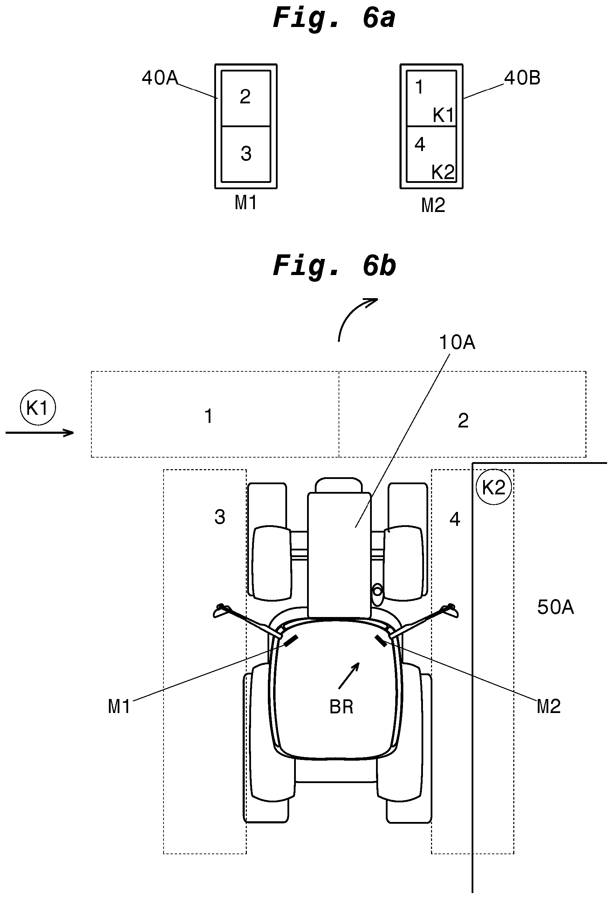

Fig. 6a zeigt eine schematische Ansicht zweier Wiedergabeeinheiten 40A, 40B mit darauf abgebildeten Nahbereichen 1, 2, 3, 4, mit Sichtfeldern bzw. Sichtbereichen, und Kollisionsbereichen K1, K2 gemäß einer dritten Ausführungsform. In Fig. 6b ist die zu Fig. 6a gehörende Anordnung der Nahbereiche 1, 2, 3, 4 und der Kollisionsbereiche K1, K2 zu sehen. Wie in Fig. 4b und 5b, ist auch in Fig. 6b ein landwirtschaftlicher Traktor 10A in einer Draufsicht gezeigt, der in der Fahrerkabine zwei Monitore M1, M2 aufweist. Die um den Traktor 10A herum angeordneten Nahbereiche 1 und 2 verlaufen in Breitenrichtung des Traktors 10A aneinander angrenzend vor dem Traktor 10A und erstrecken sich insgesamt in hohem Maße über die Breite des Traktors 10A hinaus. Der Nahbereich 3 verläuft links neben dem Traktor 10A und entspricht in seiner Längserstreckung in etwa der Länge des Traktors 10A. Der Nahbereich 4 verläuft rechts neben dem Traktor 10A und entspricht in seiner Längserstreckung ebenfalls in etwa der Länge des Traktors 10A. Rechts neben dem Traktor 10A befindet sich ein Gebäude 50A. Der Nahbereich 4 umfasst einen Teil des Gebäudes 50A.

Der in Fig. 6b gezeigte Traktor 10A führt eine Kurvenfahrt nach rechts vorne durch (siehe Pfeil im oberen Teil aus Fig. 6b), um nach dem sich rechts neben dem Traktor 10A befindlichen Gebäude 50A abzubiegen. Um die Fahrzeugumgebung beobachten zu können, blickt der Fahrer bei solchen einem Abbiegevorgang überwiegend in den rechten Außenspiegel bzw. bei einem Spiegelersatzsystem auf den rechten Monitor M2, der das Bild einer rechts außen montierten Bildaufnahmeeinheit (nicht gezeigt) zeigt. Die Blickrichtung BR des Fahrers verläuft in Fig. 6b somit nach rechts vorne (siehe Pfeil BR in der Fahrerkabine).

Bei dem in Fig. 6b gezeigten Fahrmanöver (Kurvenfahrt nach rechts vorne) entsteht im Nahbereich 1, das heißt, links vor dem Traktor 10A, ein Kollisionsbereich K1, beispielsweise durch ein herannahendes weiteres Fahrzeug (nicht gezeigt), das die Fahrspur des Traktors 10A kreuzt, und im Bereich der Ecke des Gebäudes 50A, um die der Fahrer abbiegen möchte, entsteht ein Kollisionsbereich K2. Es besteht somit die Gefahr, dass der Traktor 10A vorne rechts mit einem weiteren Fahrzeug kollidiert und vorne rechts mit der Gebäudeecke kollidiert. Daher entspricht der Kollisionsbereich K1 nicht dem gesamten Nahbereich 1, sondern lediglich einem Teilbereich des Nahbereichs 1, der ein herannahendes Auto repräsentiert. Analog entspricht der Kollisionsbereich K2 einem Teilbereich des Nahbereichs 2, der die Gebäudeecke repräsentiert. In Fig. 6b sind die beiden Kollisionsbereiche K1, K2 als kreisförmige Flächen dargestellt.

In Fig. 6a ist zu sehen, dass die Kollisionsbereiche K1, K2 dem Fahrer aufgrund der zu erwartenden Blickrichtung (siehe Pfeil BR nach rechts vorne in Fig. 6b) auf dem rechten Monitor M2 der beiden in der Fahrerkabine angeordneten Monitore M1, M2 angezeigt werden, um dem Fahrer, wie bereits bei den in Fig. 4a und 5a gezeigten Ausführungsformen, unter ergonomischen Gesichtspunkten eine schnelle Erfassung der beiden Kollisionsbereiche K1, K2 zu ermöglichen. In dem in Fig. 6a gezeigten Beispiel wird der Nahbereich 1 zusammen mit dem Kollisionsbereich K1 in der oberen Hälfte des Monitors M2 angezeigt, wohingegen der Nahbereich 4 zusammen mit dem Kollisionsbereich K2 in der unteren Hälfte des Monitors M2 angezeigt wird. Auf dem linken Monitor M1 werden die übrigen beiden Nahbereiche 2 und 3 angezeigt, wobei der Nahbereich 2 in einer oberen Hälfte und der Nahbereich 3 in einer unteren Hälfte des Monitors M1 angezeigt wird.

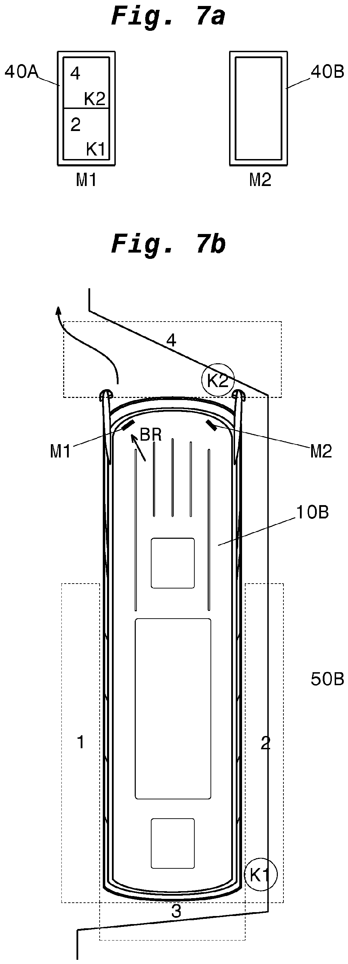

Fig. 7a zeigt eine schematische Ansicht zweier Wiedergabeeinheiten 40A, 40B mit darauf abgebildeten Nahbereichen 2, 4, mit Sichtbereichen bzw. Sichtfeldern, und Kollisionsbereichen K1, K2 gemäß einer vierten Ausführungsform. In Fig. 7b ist die zu Fig. 7a gehörende Anordnung der Nahbereiche 2, 4 und der Kollisionsbereiche K1, K2 zu sehen. In Fig. 7b ist ein Bus 10B in einer Draufsicht gezeigt, der in der Fahrerkabine zwei Monitore M1, M2 aufweist. Die um den Bus 10B herum angeordneten Nahbereiche 1 und 2 verlaufen rechts bzw. links neben dem Bus 10B und erstrecken sich von etwa Höhe der Hinterkante des Busses 10B bis in Längsrichtung des Busses 10B zu dessen Mitte. In Fig. 7b sind auch ein Nahbereich 3, der hinter dem Bus 10B liegt und in etwa der Breite des Busses 10B entspricht, und ein Nahbereich 4 zu sehen, der vor dem Bus 10B liegt und sich über die Breite des Busses 10B hinaus erstreckt. Rechts neben dem Bus 10B ist ein Hindernis 50B angeordnet, das durch eine Aussparung eine Parklücke bildet, die in etwa der Größe des Busses 10B entspricht und in der der Bus 10B sich befindet. Die Nahbereiche 2, 3 und 4 haben einen Überschneidungsbereich mit dem Hindernis 50B.

Der in Fig. 7b gezeigte Bus 10B ist dabei, aus der durch das Hindernis 50B gebildeten Parklücke nach links auszuparken (siehe Pfeil im oberen Teil aus Fig. 7b). Um während des Ausparkvorgangs die Fahrzeugumgebung beobachten zu können, blickt der Fahrer dabei üblicherweise in den linken Außenspiegel bzw. bei einem Spiegelersatzsystem auf den linken Monitor M1, der das Bild einer links außen montierten Bildaufnahmeeinheit (nicht gezeigt) zeigt. Die Blickrichtung BR des Fahrers verläuft in Fig. 7b somit nach links vorne (siehe Pfeil BR in der Fahrerkabine).

Bei dem in Fig. 7b gezeigten Fahrmanöver (Ausparkvorgang nach links) entsteht im Nahbereich 2, genauer, auf Höhe des rechten Hinterrades, ein Kollisionsbereich K1, und in dem Nahbereich 4 entsteht auf Höhe der vorderen rechten Ecke des Busses 10B ein Kollisionsbereich K2. Es besteht somit die Gefahr, dass der Bus 10B vorne rechts und hinten rechts mit dem Hindernis 50B kollidiert. Daher entspricht der Kollisionsbereich K1 nicht dem gesamten Nahbereich 2, sondern lediglich einem Teilbereich des Nahbereichs 2. Analog entspricht der Kollisionsbereich K2 einem Teilbereich des Nahbereichs 4. In Fig. 7b sind die beiden Kollisionsbereiche K1, K2 als kreisförmige Flächen dargestellt.

In Fig. 7a ist zu sehen, dass die Kollisionsbereiche K1, K2 dem Fahrer aufgrund der zu erwartenden Blickrichtung (siehe Pfeil BR nach links vorne in Fig. 7b) auf dem linken Monitor M1 der beiden in der Fahrerkabine angeordneten Monitore M1, M2 angezeigt werden, um dem Fahrer, wie bereits bei den in Fig. 4a, 5a und 6a gezeigten Ausführungsformen, unter ergonomischen Gesichtspunkten eine schnelle Erfassung der beiden Kollisionsbereiche K1, K2 zu ermöglichen. In dem in Fig. 7a gezeigten Beispiel wird der Nahbereich 2 zusammen mit dem Kollisionsbereich K1 in der unteren Hälfte des Monitors M1 angezeigt, wohingegen der Nahbereich 4 zusammen mit dem Kollisionsbereich K2 in der oberen Hälfte des Monitors M1 angezeigt wird. Auf dem rechten Monitor M2 können die übrigen beiden Nahbereiche 1 und 3 angezeigt werden.

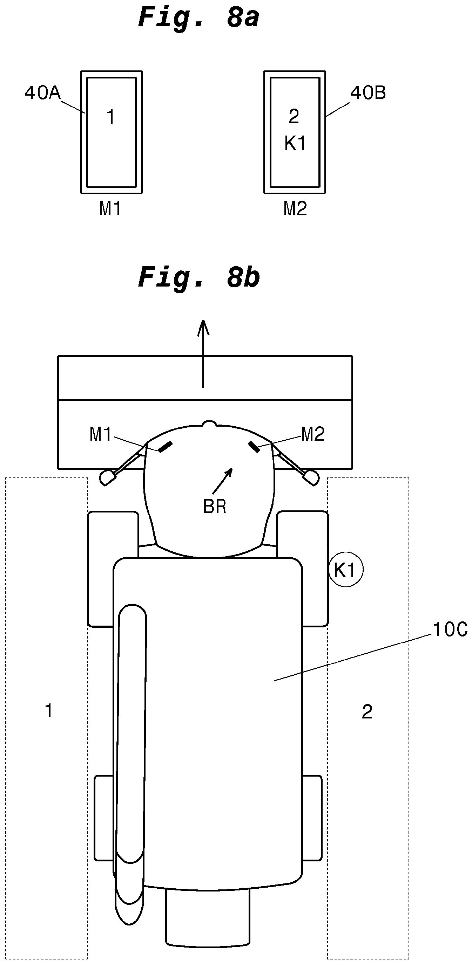

Fig. 8a zeigt eine schematische Ansicht zweier Wiedergabeeinheiten 40A, 40B mit darauf abgebildeten Nahbereichen 1, 2 mit Sichtfeldern und Sichtbereichen, und einem Kollisionsbereich K1 gemäß einer fünften Ausführungsform. In Fig. 8b ist die zu Fig. 8a gehörende Anordnung der Nahbereiche 1, 2 und des Kollisionsbereichs K1 um ein Fahrzeug herum zu sehen. In Fig. 8b ist ein Nutzfahrzeug 10C mit einem in Vorwärtsrichtung vor dem Nutzfahrzeug angeordneten Anbau (Arbeitswerkzeug), wie beispielsweise ein Schneeräumschild, in einer Draufsicht gezeigt. Wie die in den anderen Ausführungsformen gezeigten Fahrzeuge weist auch das in Fig. 8b gezeigte Nutzfahrzeug 10C in der Fahrerkabine zwei Monitore M1, M2 auf. Die um Nutzfahrzeug herum angeordneten Nahbereiche 1 und 2 verlaufen links bzw. rechts neben dem Nutzfahrzeug 10C und erstrecken sich von einer Hinterkante des Nutzfahrzeugs 10C in Längsrichtung des Fahrzeugs bis auf Höhe der Außenspiegel.

Das in Fig. 8b gezeigte Nutzfahrzeug 10C führt eine Geradeausfahrt durch (siehe Pfeil im oberen Teil aus Fig. 8b). Auf der rechten Seite auf Höhe des rechten Vorderreifens befindet sich ein (nicht gezeigtes) Hindernis, mit dem das Nutzfahrzeug 10C bei einer Geradeausfahrt kollidieren kann. Daher befindet sich ein Kollisionsbereich K1 auf Seite des rechten Vorderreifens. In Fig. 8b ist der Kollisionsbereich K1 als kreisförmige Flächen dargestellt. Um den Kollisionsbereich K1 bei dem geplanten Fahrmanöver, nämlich der Geradeausfahrt, beobachten zu können, blickt der Fahrer bei solchen einem Fahrmanöver überwiegend in den rechten Außenspiegel bzw. bei einem Spiegelersatzsystem auf den rechten Monitor M2, der das Bild einer rechts außen montierten Bildaufnahmeeinheit (nicht gezeigt) zeigt. Die Blickrichtung BR des Fahrers verläuft in Fig. 8b somit nach rechts vorne (siehe Pfeil BR in der Fahrerkabine).

In Fig. 8a ist zu sehen, dass der Kollisionsbereich K1 dem Fahrer aufgrund der zu erwartenden Blickrichtung (siehe Pfeil BR nach rechts vorne in Fig. 8b) auf dem rechten Monitor M2 der beiden in der Fahrerkabine angeordneten Monitore M1, M2 angezeigt wird, um dem Fahrer, wie bereits bei den in Fig. 4a, 5a, 6a und 7a gezeigten Ausführungsformen, unter ergonomischen Gesichtspunkten eine schnelle Erfassung des Kollisionsbereichs K1 zu ermöglichen. In dem in Fig. 8a gezeigten Beispiel wird der Nahbereich 2 zusammen mit dem Kollisionsbereich K1 in dem gesamten Monitor M2 angezeigt, wohingegen der Nahbereich 1 auf dem Monitor M2 angezeigt wird.

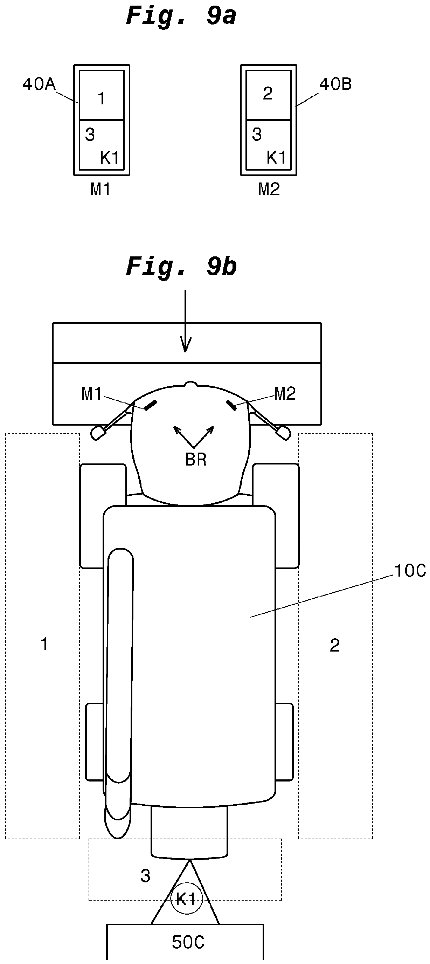

Fig. 9a zeigt eine schematische Ansicht zweier Wiedergabeeinheiten 40A, 40B mit darauf abgebildeten Nahbereichen 1, 2, 3, mit Sichtfeldern bzw. Sichtbereichen, und einem Kollisionsbereich K1 gemäß einer sechsten Ausführungsform. In Fig. 9b ist die zu Fig. 9a gehörende Anordnung der Nahbereiche 1, 2, 3 und des Kollisionsbereichs K1 um ein Fahrzeug herum zu sehen. Wie in Fig. 8b, ist auch in Fig. 9b ein Nutzfahrzeug 10C mit einem in Vorwärtsrichtung vor dem Nutzfahrzeug angeordneten Anbau, wie beispielsweise ein Schneeräumschild, in einer Draufsicht gezeigt. Wie die in den anderen Ausführungsformen gezeigten Fahrzeuge weist auch das in Fig. 9b gezeigte Nutzfahrzeug 10C in der Fahrerkabine zwei Monitore M1, M2 auf. Wie bei dem in Fig. 8a gezeigten Fahrzeug verlaufen bei dem in Fig. 9a gezeigten Nutzfahrzeug 10C die Nahbereiche 1 und 2 links bzw. rechts neben dem Nutzfahrzeug 10C und erstrecken sich von einer Hinterkante des Nutzfahrzeugs 10c in Längsrichtung des Fahrzeugs bis auf Höhe der Außenspiegel. Der zusätzliche Nahbereich 3 befindet sich hinter dem Fahrzeug und erstreckt sich in etwa über die gesamte Breite des Fahrzeugs 10C.

Das in Fig. 9b gezeigte Nutzfahrzeug 10C führt eine gerade Rückwärtsfahrt durch (siehe Pfeil im oberen Teil aus Fig. 9b). Hinter dem Nutzfahrzeug 10C befindet sich ein Hindernis 50C, mit dem das Nutzfahrzeug 10C bei einer Rückwärtsfahrt kollidieren kann. Daher befindet sich ein Kollisionsbereich K1 hinter dem Nutzfahrzeug 10C. Genauer entspricht der Kollisionsbereich K1 einem Teilbereich bzw. Teilausschnitt des Nahbereichs 3. In Fig. 9b ist der Kollisionsbereich K1 als kreisförmige Fläche dargestellt. Um den Kollisionsbereich K1 bei dem geplanten Fahrmanöver, nämlich der Rückwärtsfahrt, beobachten zu können, blickt der Fahrer bei solchen einem Fahrmanöver überwiegend in den linken Außenspiegel bzw. bei einem Spiegelersatzsystem auf den linken Monitor M1, der das Bild einer links außen montierten Bildaufnahmeeinheit (nicht gezeigt) zeigt. Die Blickrichtung BR des Fahrers verläuft in Fig. 9b somit nach links vorne (siehe Pfeil BR in der Fahrerkabine). Allerdings ist es bei solch einem Fahrmanöver auch üblich, dass der Fahr dann und wann auf den Monitor M2 rechts in der Fahrerkabine blickt. Mitunter erfolgt die Beobachtung der beiden Monitor M1, M2 sogar abwechselnd.

Daher wird, wie in Fig. 8a gezeigt, der Kollisionsbereich K1 dem Fahrer aufgrund der zu erwartenden Blickrichtungen (siehe Pfeile BR nach links und rechts vorne in Fig. 9b) sowohl auf dem linken Monitor M1 als auch dem rechten Monitor M2 angezeigt, um dem Fahrer, wie bereits bei den in Fig. 4a, 5a, 6a,7a und 8a gezeigten Ausführungsformen, unter ergonomischen Gesichtspunkten eine schnelle Erfassung des Kollisionsbereichs K1 zu ermöglichen. In dem in Fig. 9a gezeigten Beispiel wird der Nahbereich 3 zusammen mit dem Kollisionsbereich K1 jeweils in dem unteren Teil des Monitors V1, M2 angezeigt, wohingegen der Nahbereich 1 auf dem oberen Teil des linken Monitors M1 und der Nahbereich 2 auf dem oberen Teil des rechten Monitors M2 angezeigt wird.

Allgemein kann unter Berücksichtigung der oben erläuterten Ausführungsformen festgehalten werden, dass der wenigstens eine Kollisionsbereich bevorzugt zusammen mit dem Nahbereich angezeigt wird, dem er als Teilbereich entnommen wurde. Alternativ ist es aber auch möglich einen Nahbereich zusammen mit einem Kollisionsbereich anzuzeigen, der nicht aus dem angezeigten Nahbereich, sondern einem weiteren Nahbereich entnommen wurde. Ferner ist festzuhalten, dass die Anzeige wenigstens eines Nahbereichs und wenigstens eines Kollisionsbereichs bevorzugt auf der Wiedergabeeinheit erfolgt, die der Fahrer abhängig von dem jeweiligen Fahrmanöver üblicherweise betrachten wird. Kann keine Anzeigeeinheit ermittelt werden, die der Fahrer bei einem Fahrmanöver ausschließlich oder öfter betrachtet, kann eine Anzeige wenigstens eines Nahbereichs und wenigstens eines Kollisionsbereichs auch auf allen vorhandenen Wiedergabeeinheiten erfolgen. Der Kollisionsbereich entspricht einem Teilbereich bzw. einem Bildausschnitt eines um das Fahrzeug herum aufgenommenen Nahbereichs. So kann der Kollisionsbereich detaillierter und damit für den Fahrer besser einsehbar angezeigt werden. Die Auswahl des Kollisionsbereichs erfolgt durch die Berechnungseinheit basierend auf diversen Signalen, wie beispielsweise basierend auf manuellen Eingaben des Fahrers, wie Blinken, Bremsen/Beschleunigen, etc., automatischer Positionserfassung durch ein Positionierungssystem, Überwachungssensoren, wie Radarsensoren, oder Signalen der Aufnahmeeinrichtungen.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### BEZUGSZEICHENLISTE

- 1,2,3,4,5: Nahbereich
- 10, 10A, 10B, 10C: Fahrzeug
- 20A, 20B, 20C, 20D, 20E: Aufnahmeeinheit
- 30: Berechnungseinheit
- 40A, 40B: Wiedergabeeinheit
- 50A, 50B, 50C: Gebäude, Hindernis
- 60: Sensoreinheit
- 100: Sichtsystem
- AP: Augpunkt
- BR: Blickrichtung
- K1, K2: Kollisionsbereich
- M1, M2: Monitor
- L, L1, L2: linker Nahbereich
- R, R1, R2: rechter Nahbereich
- V: vorderer Nahbereich
- H, H1, H2: hinterer Nahbereich
- Ü1, Ü2, Ü3, Ü4: Überschneidungsbereich

## Patentansprüche

1. Sichtsystem (100) für ein Fahrzeug (10, 10A, 10B, 10C), enthaltend
wenigstens eine Aufnahmeeinheit (20A, 20B), die angepasst ist, wenigstens einen ersten Nahbereich (1, 2, 3, 4) um das Fahrzeug (10, 10A, 10B, 10C) herum aufzunehmen,
wenigstens eine Berechnungseinheit (30), die angepasst ist, die von der Aufnahmeeinheit (20A, 20B) aufgenommenen Daten zu verarbeiten, und
wenigstens eine Wiedergabeeinheit (40A, 40B), die angepasst ist, den Nahbereich (1, 2, 3, 4) für einen das Fahrzeug (10, 10A, 10B, 10C) steuernden Fahrer sichtbar anzuzeigen,
wobei bei situationsbedingten Fahrmanövern zusätzlich wenigstens ein Kollisionsbereich (K1, K2), der einen kollisionsgefährdeten Bereich um das Fahrzeug (10, 10A, 10B, 10C) herum enthält, auf der Wiedergabeeinheit (40A, 40B) angezeigt wird, und
wobei der Kollisionsbereich (K1, K2) einem Bildausschnitt eines durch die Aufnahmeeinheit (20A, 20B) aufgenommenen Nahbereichs (1, 2, 3, 4) um das Fahrzeug (10, 10A, 10B, 10C) herum entspricht, wobei
mehrere Kollisionsbereiche (K1, K2) gleichzeitig auf der wenigstens einen Wiedergabeeinheit (40A, 40B) angezeigt werden,
der Bildausschnitt kontinuierlich und in Echtzeit mit Fortsetzen des Fahrmanövers angepasst wird, und
das Sichtsystem (100) ferner eine Sensoreinheit (60) enthält, die ein situationsbedingtes Fahrmanöver durch Empfangen eines entsprechenden Eingangssignals ermittelt und die entsprechenden Kollisionsbereiche (K1, K2) basierend auf dem Eingangssignal festlegt.

2. Sichtsystem (100) nach Anspruch 1, wobei der erste Nahbereich (1, 2, 3, 4) wenigstens einen Teil eines gesetzlich vorgeschriebenen Sichtfelds enthält.

3. Sichtsystem (100) nach Anspruch 1 oder 2, wobei die Wiedergabeeinheit (40A, 40B) angepasst ist, den ersten Nahbereich (1, 2, 3, 4) dauerhaft und in Echtzeit anzuzeigen, und/oder angepasst ist, den Kollisionsbereich (K1, K2) mittels Skalierung anzuzeigen.

4. Sichtsystem (100) nach einem der vorangehenden Ansprüche, wobei der erste Nahbereich (1, 2, 3, 4) und der Kollisionsbereich (K1, K2) auf einer gemeinsamen Wiedergabeeinheit (40A, 40B) angezeigt werden.

5. Sichtsystem (100) nach Anspruch 4, wobei der Kollisionsbereich (K1, K2) mittels Einblendung auf der gemeinsamen Wiedergabeeinheit (40A, 40B) angezeigt wird.

6. Sichtsystem (100) nach Anspruch 4, wobei der Kollisionsbereich (K1, K2) mittels Überblendung auf der gemeinsamen Wiedergabeeinheit (40A, 40B) angezeigt wird.

7. Sichtsystem (100) nach Anspruch 1, wobei das Eingangssignal durch eine manuelle Eingabe des Fahrers und/oder eine Bewegung des Fahrers erzeugt wird und/oder wobei das Eingangssignal durch Erfassung der Position des Fahrzeugs erzeugt wird und/oder wobei das Eingangssignal durch Überwachung der Umgebung um das Fahrzeug herum erzeugt wird.

8. Sichtsystem (100) nach Anspruch 1, wobei die Überwachung um das Fahrzeug (10, 10A, 10B, 10C) herum über die wenigstens eine Aufnahmeeinheit (20A, 20B) und/oder eine zusätzliche Überwachungseinheit erfolgt.

9. Sichtsystem (100) nach einem der vorangehenden Ansprüche, enthaltend wenigstens zwei Wiedergabeeinheiten (40A, 40B), wobei wenigstens der Kollisionsbereich (K1, K2) auf derjenigen der wenigstens zwei Wiedergabeeinheiten (40A, 40B) angezeigt wird, die der Fahrer abhängig von dem situationsbedingten Fahrmanöver betrachtet.

10. Sichtsystem (100) nach einem der Ansprüche 1 bis 3 und 7 oder 8, ferner enthaltend wenigstens eine weitere Wiedergabeeinheit (40A, 40B), wobei der Nahbereich (1, 2, 3, 4) und der Kollisionsbereich (K1, K2) getrennt auf der wenigstens einen Wiedergabeeinheit (40A) und der wenigstens einen weiteren Wiedergabeeinheit (40B) angezeigt werden.

11. Sichtsystem (100) nach einem der vorangehenden Ansprüche, ferner enthaltend wenigstens eine zweite Aufnahmeeinheit (20A, 20B), die angepasst ist, wenigstens einen zweiten Nahbereich (1, 2, 3, 4) um das Fahrzeug (10, 10A, 10B, 10C) herum aufzunehmen.

12. Sichtsystem (100) nach Anspruch 11, wobei der erste Nahbereich (1, 3) und der zweite Nahbereich (2, 4) aneinander angrenzen oder nicht aneinander angrenzen.

13. Sichtsystem (100) nach einem der vorangehenden Ansprüche 1 bis 10, wobei der Kollisionsbereich (K1, K2) einem Teil des ersten Nahbereichs (1, 3) entspricht oder wobei der Kollisionsbereich (K1, K2) einem Teil des zweiten Nahbereichs (2, 4) entspricht.

14. Sichtsystem (100) nach Anspruch 11 oder 12, wobei der Kollisionsbereich (K1, K2) und der erste Nahbereich (1, 3) oder der zweite Nahbereich (2, 4) aneinander angrenzen.

## Claims

1. View system (100) for a vehicle (10, 10A, 10B, 10C), comprising
at least one capture unit (20A, 20B) which is adapted to capture at least one first near area (1, 2, 3, 4) around the vehicle (10, 10A, 10B, 10C),
at least one control unit (30) which is adapted to process the data captured by the capture unit (20A, 20B), and
at least one reproduction unit (40A, 40B) which is adapted to show the near area (1, 2, 3, 4) visibly for a driver steering the vehicle (10, 10A, 10B, 10C),
wherein, in driving maneuvers conditioned by the situation, at least one collision area (K1, K2) which comprises an area at risk of collision around the vehicle (10, 10A, 10B, 10C) is additionally shown on the reproduction unit (40A, 40B), and
wherein the collision area (K1, K2) corresponds to an image section of a near area (1, 2, 3, 4) around the vehicle (10, 10A, 10B, 10C) captured by the capture unit (20A, 20B), wherein
a plurality of collision areas (K1, K2) are shown at the same time on the at least one reproduction unit (40A, 40B)
the image section is adapted continuously and in real time with continuation of a driving maneuver, and
the view system (100) further comprises a sensor unit (60) which detects a driving maneuver conditioned by the situation by receiving a corresponding input signal and which determines the corresponding collision areas (K1, K2) based on the input signal.

2. View system (100) according to claim 1, wherein the first near area (1, 2, 3, 4) comprises at least a part of legally prescribed field of view.

3. View system (100) according to claim 1 or 2, wherein the reproduction unit (40A, 40B) is adapted to show the first near area (1, 2, 3, 4) permanently and in real time and/or is adapted to show the collision area (K1, K2) by means of scaling.

4. View system (100) according to anyone of the preceding claims, wherein the first near area (1, 2, 3, 4) and the collision area (K1, K2) are shown on a common reproduction unit (40A, 40B).

5. View system (100) according to claim 4, wherein the collision area (K1, K2) is shown on the common reproduction unit (40A, 40B) by means of superimposition.

6. View system (100) according to claim 4, wherein the collision area (K1, K2) is shown on the common reproduction unit (40A, 40B) by means of overlaying.

7. View system (100) according to claim 1, wherein the input signal is generated by a manual input of the driver and/or a movement of the driver and/or wherein the input signal is generated by capturing the position of the vehicle and/or wherein the input signal is generated by monitoring the environment around the vehicle.

8. View system (100) according to claim 1, wherein the monitoring around the vehicle (10, 10A, 10B, 10C) is performed by the at least one capture unit (20A, 20B) and/or an additional monitoring unit.

9. View system (100) according to anyone of the preceding claims, comprising at least two reproduction units (40A, 40B), wherein at least the collision area (K1, K2) is shown on that one of the at least two reproduction units (40A, 40B) which is viewed by the driver depending on the driving maneuver conditioned by the situation.

10. View system (100) according to anyone of claims 1 to 3 and 7 or 8, further comprising at least one further reproduction unit (40A, 40B), wherein the near area (1, 2, 3, 4) and the collision area (K1, K2) are shown separately on the at least one reproduction unit (40A) and the at least one further reproduction unit (40B).

11. View system (100) according to anyone of the preceding claims, further comprising at least one second capture unit (20A, 20B) which is adapted to capture at least a second near area (1, 2, 3, 4) around the vehicle (10, 10A, 10B, 10C).

12. View system (100) according to claim 11, wherein the first near area (1, 3) and the second near area (2, 4) are adjacent to each other or are not adjacent to each other.

13. View system (100) according to anyone of the preceding claims 1 to 10, wherein the collision area (K1, K2) corresponds to a part of the first near area (1, 3) or wherein the collision area (K1, K2) corresponds to a part of the second near area (2, 4).

14. View system (100) according to claim 11 or 12, wherein the collision area (K1, K2) and the first near area (1, 3) or the second near area (2, 4) are adjacent to each other.

## Revendications

1. Système de vision (100) pour un véhicule (10, 10A, 10B, 10C), comprenant
au moins une unité d'enregistrement (20A, 20B), qui est adaptée pour enregistrer au moins une première zone de proximité (1, 2, 3, 4) autour du véhicule (10, 10A, 10B, 10C),
au moins une unité de calcul (30), qui est adaptée pour traiter les données enregistrées par l'unité d'enregistrement (20A, 20B), et
au moins une unité d'affichage (40A, 40B), qui est adaptée pour afficher visiblement la zone de proximité (1, 2, 3, 4) pour un chauffeur conduisant le véhicule (10, 10A, 10B, 10C),
dans lequel, en outre, dans des manœuvres de conduite en fonction de la situation, au moins une zone de collision (K1, K2), comprenant une zone à risque de collision autour du véhicule (10, 10A, 10B, 10C), est affichée sur l'unité d'affichage (40A, 40B), et
dans lequel la zone de collision (K1, K2) correspond à une section d'image d'une zone de proximité (1, 2, 3, 4) enregistrée par l'unité d'enregistrement (20A, 20B) autour du véhicule (10, 10A, 10B, 10C), dans lequel
plusieurs zones de collision (K1, K2) sont affichées simultanément sur l'au moins une unité d'affichage (40A, 40B),
la section d'image est actualisée en continu et en temps réel au cours de la manœuvre de conduite, et
le système de vision (100) en outre comprend une unité capteur (60), qui détecte une manœuvre de conduite en fonction de la situation en recevant un signal d'entrée correspondant, et qui établit les zones de collision (K1, K2) correspondantes sur la base du signal d'entrée.

2. Système de vision (100) selon la revendication 1, dans lequel la première zone de proximité (1, 2, 3, 4) comprend au moins une partie d'un champ de vision légalement requis.

3. Système de vision (100) selon la revendication 1 ou 2, dans lequel l'unité d'affichage (40A, 40B) est adaptée pour afficher la première zone de proximité (1, 2, 3, 4) en permanence et en temps réel, et/ou est adaptée pour afficher la zone de collision (K1, K2) par mise à l'échelle.

4. Système de vision (100) selon l'une des revendications précédentes, dans lequel la première zone de proximité (1, 2, 3, 4) et la zone de collision (K1, K2) sont affichées sur une unité d'affichage (40A, 40B) commune.

5. Système de vision (100) selon la revendication 4, dans lequel la zone de collision (K1, K2) est affichée par insertion sur l'unité d'affichage (40A, 40B) commune.

6. Système de vision (100) selon la revendication 4, dans lequel la zone de collision (K1, K2) est affichée par superposition sur l'unité d'affichage (40A, 40B) commune.

7. Système de vision (100) selon la revendication 1, dans lequel le signal d'entrée est généré par saisie manuelle par le chauffeur et/ou par un mouvement du chauffeur, et/ou dans lequel le signal d'entrée est généré en détectant la position du véhicule, et/ou dans lequel le signal d'entrée est généré par la surveillance de l'environnement autour du véhicule.

8. Système de vision (100) selon la revendication 1, dans lequel la surveillance autour du véhicule (10, 10A, 10B, 10C) s'effectue par l'intermédiaire de l'au moins une unité d'enregistrement (20A, 20B) et/ou par l'intermédiaire d'une unité de surveillance supplémentaire.

9. Système de vision (100) selon l'une des revendications précédentes, comprenant au moins deux unités d'affichage (40A, 40B), dans lequel au moins la zone de collision (K1, K2) est affichée sur celle des au moins deux unités d'affichage (40A, 40B) que le chauffeur regarde en fonction de la manœuvre de conduite en fonction de la situation.

10. Système de vision (100) selon l'une des revendications 1 à 3 et 7 ou 8, comprenant en outre au moins une unité d'affichage (40A, 40B) additionnelle, dans lequel la zone de proximité (1, 2, 3, 4) et la zone de collision (K 1, K2) sont affichées séparément sur l'au moins une unité d'affichage (40A) et l'au moins une unité d'affichage (40B) additionnelle.

11. Système de vision (100) selon l'une des revendications précédentes, comprenant en outre au moins une deuxième unité d'enregistrement (20A, 20B), qui est adaptée pour enregistrer au moins une deuxième zone de proximité (1, 2, 3, 4) autour du véhicule (10, 10A, 10B, 10C).

12. Système de vision (100) selon la revendication 11, dans lequel la première zone de proximité (1, 3) et la deuxième zone de proximité (2, 4) sont contiguës ou non contiguës.

13. Système de vision (100) selon l'une des revendications précédentes 1 à 10, dans lequel la zone de collision (K1, K2) correspond à une partie de la première zone de proximité (1, 3) ou dans lequel la zone de collision (K1, K2) correspond à une partie de la deuxième zone de proximité (2, 4).

14. Système de vision (100) selon la revendication 11 ou 12, dans lequel la zone de collision (K1, K2) et la première zone de proximité (1, 3) ou la deuxième zone de proximité (2, 4) sont contiguës.
